# EUROPEAN PATENT SPECIFICATION

(11) **EP 3 081 998 B1**
(45) Date of publication and mention of the grant of the patent: **09.02.2022**
(21) Application number: 16165179.9
(22) Date of filing: 13.04.2016
(51) Int. Cl.: G04G 13/02

(54) **METHOD AND DEVICE FOR REMINDING BASED ON ALARM CLOCK**
VERFAHREN UND VORRICHTUNG ZUR ERINNERUNG BASIERERT AUF EINEM WECKER
PROCÉDÉ ET DISPOSITIF POUR FOURNIR UN RAPPEL BASÉ SUR UN RÉVEIL

(30) Priority: 16.04.2015 CN 201510181426
(43) Date of publication of application: 19.10.2016
(73) Proprietor: Xiaomi Inc., Beijing 100085 (CN)
(72) Inventor: WANG, Hongqiang, 100085 BEIJING (CN); GAO, Yi, 100085 BEIJING (CN); LONG, Hai, 100085 BEIJING (CN)
(74) Representative: Cabinet Beau de Loménie

(56) References cited:
- WO-A1-2011/041868
- WO-A1-2013/139066
- CN-B- 102 413 416
- US-A1- 2002 099 550
- US-A1- 2002 186 618
- US-A1- 2008 102 786

## Description

### TECHNICAL FIELD

The present disclosure generally relates to the technical field of terminals, and more particularly, to a method and a device for reminding based on an alarm clock.

### BACKGROUND

Current terminals, such as mobile devices, tablet computers and personal digital assistants (PDA) or the like all have an alarm clock function. With the intelligentized development and widespread use of a terminal, it gradually replaces the traditional alarm clock, bringing much convenience for people.

In the related art, an alarm clock on a terminal is just one alarm clock simply set based on a time point. A user needs to set corresponding alarm clock respectively according to different applications. The steps of setting are complicated, operation is inconvenient, and user experience is poor.

Document WO 2011/041868 A1 discloses an Internet-enabled alarm clock device for use by a user who is being supervised remotely by a supervisor. The device permits the supervisor to configure a server connected to the Internet to transmit alarm setting messages to the device which determine when a visual or audible alarm will be activated on the device.

Document WO 2013/139066 discloses an alarm clock could service method and system.

### SUMMARY

The invention is defined in the appended set of claims.

The present invention provides a method and a device for reminding based on an alarm clock. It solves the problem in the related art that when a plurality of alarm clocks are set, because there is no relevance between the plurality of alarm clocks, they need to be opened respectively to make operation inconvenient.

Accordingly, in a first aspect, the present invention provides a method applied in a mobile terminal to perform reminding based on an alarm clock according to claim 1. According to a second aspect, the present invention provides a device terminal for performing reminding based on an alarm clock according to claim 3. According to a third aspect, the present invention provides a computer program which when executed on a processor of a mobile terminal, performs the method according to the first aspect of the invention. Preferred embodiments of the present invention are defined in the dependent claims.

In accordance with the first aspect of the invention, there is provided a method applied in a mobile terminal to perform reminding based on an alarm clock, including:
inquiring a database of an event flow alarm clock to judge whether a next alarm clock exists, wherein the event flow alarm clock contains at least two alarm clocks, and each alarm clock of the at least two alarm clocks contains at least one event respectively; and
when it is judged that the next alarm clock exists, at a reminding time of the next alarm clock, outputting preset reminding information.

In a particular embodiment, which is not covered by the appended claims, the database is in a cloud server, the outputting preset reminding information includes:
receiving the preset reminding information in the database sent by the cloud server; and
outputting the preset reminding information by a preset time length.

In a particular embodiment, which is not covered by the appended claims, the database is in the cloud server, before the inquiring a database of an event flow alarm clock, the method further includes:
acquiring the database of the event flow alarm clock from the cloud server.

In a particular embodiment, which is not covered by the appended claims, the acquiring the database of the event flow alarm clock includes:
sending to the cloud server a request for acquiring the database; and
receiving information of the database from the cloud server.

In a preferred embodiment of the present invention, the outputting preset reminding information includes:
reading preset reminding information corresponding to the next alarm clock; and
outputting the preset reminding information by a preset time length.

In a particular embodiment, the preset reminding information includes: any one or more among a ring tone, a voice, an image-text or a video.

In accordance with the first aspect of the invention, before the inquiring a database of an event flow alarm clock, the method further includes:
setting reminding times and preset reminding information of respective alarm clocks contained in the event flow alarm clock in the database.

In a particular embodiment, the setting reminding times of respective alarm clocks contained in the event flow alarm clock in the database includes:
receiving a time number; and
storing the time number as a reminding time of an alarm clock being set.

In a particular embodiment, the setting reminding times of respective alarm clocks contained in the event flow alarm clock in the database includes:
outputting and displaying a list of time;
receiving a time number selected from the list of time; and
storing the time number as a reminding time of an alarm clock being set.

In a particular embodiment, the setting reminding times of respective alarm clocks contained in the event flow alarm clock in the database includes:
inquiring and displaying a list of unique identifications of created alarm clocks;
according to one or more unique identifications selected from the list, selecting a corresponding alarm clock as an alarm clock being set; and
setting a reminding time of the corresponding alarm clock as a reminding time of the alarm clock being set.

In the first aspect of the present invention, the setting reminding times of respective alarm clocks contained in the event flow alarm clock in the database includes:
setting a reminding time of a first alarm clock contained in the event flow alarm clock;
for a second alarm clock to a last alarm clock contained in the event flow alarm clock, successively setting a time interval between an alarm clock being set and a previous alarm clock; and
based on the time interval and the reminding time of the previous alarm clock, calculating a reminding time of the alarm clock being set.

In a particular embodiment, when the database is in a local terminal, the method further includes:
recording unique identifications of alarm clocks having accomplished reminding in the database; and
when it is monitored that the event flow alarm clock has finished reminding, calculating completeness based on the recorded unique identifications, wherein the completeness is a ratio of a number of the alarm clock having accomplished reminding to a number of all alarm clocks in the event flow alarm clock.

In a particular embodiment, the monitoring that the event flow alarm clock has finished reminding includes:
receiving an indication of aborting the event flow alarm clock from a user; or
inquiring the database of the event flow alarm clock to judge that no next alarm clock exists.

In a particular embodiment, when the database is in the local terminal, the method further includes:
creating an executable file based on the database of the event flow alarm clock; and
sending the executable file to the cloud server.

In a particular embodiment, respective events in the event flow alarm clock are correlated with each other.

In accordance with the second aspect of the present invention, there is provided a device terminal (e.g. a mobile terminal) for performing reminding based on an alarm clock, including:
an inquiring module configured to inquire a database of an event flow alarm clock to judge whether a next alarm clock exists, wherein the event flow alarm clock contains at least two alarm clocks, and each alarm clock of the at least two alarm clocks contains at least one event respectively; and
an outputting module configured to, when it is judged that the next alarm clock exists, at a reminding time of the next alarm clock, output preset reminding information.

In a particular embodiment, not covered by the appended claims, the database is in a cloud server, the outputting module includes:
a receiving sub-module configured to receive the preset reminding information in the database sent by the cloud server; and
an outputting sub-module configured to output the preset reminding information by a preset time length.

In a particular embodiment, not covered by the appended claims, the database is in the cloud server, the device further includes:
an acquiring module configured to acquire the database of the event flow alarm clock from the cloud server.

In a particular embodiment, not covered by the appended claims, the acquiring module includes:
an acquiring-request-sending sub-module configured to send to the cloud server a request for acquiring the database; and
a database-receiving sub-module configured to receive information of the database from the cloud server.

In a particular embodiment, when the database is in a local terminal, the outputting module includes:
a reading sub-module configured to read preset reminding information corresponding to the next alarm clock; and
an outputting sub-module configured to output the preset reminding information by a preset time length.

In a particular embodiment, the preset reminding information output by the outputting sub-module includes: any one or more among a ring tone, a voice, an image-text or a video.

The device defined in the second aspect of the invention further includes:
a setting module configured to set reminding times and preset reminding information of respective alarm clocks contained in the event flow alarm clock in the database.

In a particular embodiment, the setting module includes:
a receiving sub-module configured to receive a time number; and
a storing sub-module configured to store the time number as a reminding time of an alarm clock being set.

In a particular embodiment, the setting module includes:
a displaying sub-module configured to output and display a list of time;
a receiving sub-module configured to receive a time number selected from the list of time; and
a storing sub-module configured to store the time number as a reminding time of an alarm clock being set.

In a particular embodiment, the setting module includes:
an inquiring sub-module configured to inquire and display a list of unique identifications of created alarm clocks;
a selecting sub-module configured to, according to one or more unique identifications selected from the list, select a corresponding alarm clock as an alarm clock being set; and
a setting sub-module configured to set a reminding time of the corresponding alarm clock as a reminding time of the alarm clock being set.

In the device defined in the second aspect of the invention, the setting module includes:
a reminding-time-setting sub-module configured to set a reminding time of a first alarm clock contained in the event flow alarm clock;
a time-interval-setting sub-module configured to, for a second alarm clock to a last alarm clock contained in the event flow alarm clock, successively set a time interval between an alarm clock being set and a previous alarm clock; and
a calculating sub-module configured to, based on the time interval and the reminding time of the previous alarm clock, calculate a reminding time of the alarm clock being set.

In a particular embodiment, when the database is in the local terminal, the device further includes:
a recording module configured to record unique identifications of alarm clocks having accomplished reminding in the database; and
a calculating module configured to, when it is monitored that the event flow alarm clock has finished reminding, calculate completeness based on the recorded unique identifications, wherein the completeness is a ratio of a number of the alarm clock having accomplished reminding to a number of all alarm clocks in the event flow alarm clock.

In a particular embodiment, the calculating module includes:
an indication-receiving sub-module configured to receive an indication of aborting the event flow alarm clock from a user; or
a judging sub-module configured to inquire the database of the event flow alarm clock and judge whether a next alarm clock exists; and
the calculating module further includes: a calculating sub-module configured to, when the indication-receiving sub-module receives the indication of aborting the event flow alarm clock or the judging sub-module judges that no next alarm clock exists, calculate the completeness based on the recorded unique identifications.

In a particular embodiment, when the database is in the local terminal, the device further includes:
a creating module configured to create an executable file based on the database of the event flow alarm clock; and
a sending module configured to send the executable file to the cloud server.

In a particular embodiment, respective events in the event flow alarm clock are correlated with each other.

According to a further aspect of the present disclosure, there is provided a device for reminding based on an alarm clock, including:
a processor; and
a memory for storing instructions executable by the processor;
wherein the processor is configured to:
   inquire a database of an event flow alarm clock to judge whether a next alarm clock exists, wherein the event flow alarm clock contains at least two alarm clocks, and each alarm clock of the at least two alarm clocks contains at least one event respectively; and
   when it is judged that the next alarm clock exists, at a reminding time of the next alarm clock, output preset reminding information.

According to the third aspect of the present invention, there is provided a computer program which, when executing on a processor of a mobile terminal, performs the above method of the first aspect of the invention to perform reminding based on an alarm clock.

This computer program can use any programming language and take the form of source code, object code or a code intermediate between source code and object code, such as a partially compiled form, or any other desirable form.

The invention is therefore also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present disclosure may have the following beneficial effects:

In the present disclosure, the terminal inquires a database to judge whether a next alarm clock exists and outputs a corresponding reminding at a reminding time when the next alarm clock exists. Thereby, opening an event flow alarm clock means opening a plurality of alarm clocks contained in the event flow alarm clock. It achieves overall control to the plurality of alarm clocks, increases usability of alarm clocks, saves time for a user to respectively control the plurality of alarm clocks, and provides more convenience for the user.

In embodiments of the present disclosure, which are not covered by the appended claims, the database is in a cloud server. In this case, the cloud server reads the database and monitors the event flow alarm clock. When a time of the alarm clock arrives, corresponding preset reminding information is read out and sent to a terminal. The terminal outputs the preset reminding information to remind the user. When the database is in the cloud server, the terminal may also acquire the database to the local terminal to run the event flow alarm clock. The terminal may receive related information of the database by sending an acquiring request to the cloud server. It is more convenient to run the event flow alarm clock locally.

In the present invention, the database is in the local terminal. The database is run locally, the terminal directly reads a reminding time of a next alarm clock in the database and monitors the system time, so that the corresponding preset reminding information is output to remind the user at the reminding time.

In the present disclosure, when the database is in the local terminal, the user may set preset reminding information and a reminding time in advance. There are many setting ways. The preset reminding information also includes a voice, a ring tone, a video and an image-text. The user is reminded in flexible ways to achieve better user experience.

It is to be understood that both the foregoing general description and the following detailed description are exemplary and explanatory only and are not restrictive of the invention, as claimed.

### BRIEF DESCRIPTION OF THE DRAWINGS

Fig. 1 is a flow chart showing a method for reminding based on an alarm clock according to an exemplary embodiment of the present disclosure.
Fig. 2A is a schematic diagram showing an application scenario for reminding based on an alarm clock according to an exemplary embodiment of the present disclosure.
Fig. 2B is a schematic diagram showing an application scenario for reminding based on an alarm clock according to an exemplary embodiment of the present disclosure.
Fig. 3 is a block diagram illustrating a device for reminding based on an alarm clock according to an exemplary embodiment of the present disclosure.
Fig. 4 is a block diagram illustrating another device for reminding based on an alarm clock according to an exemplary embodiment of the present disclosure.
Fig. 5 is a block diagram illustrating another device for reminding based on an alarm clock according to an exemplary embodiment of the present disclosure.
Fig. 6 is a block diagram illustrating another device for reminding based on an alarm clock according to an exemplary embodiment of the present disclosure.
Fig. 7 is a block diagram illustrating another device for reminding based on an alarm clock according to an exemplary embodiment of the present disclosure.
Fig. 8 is a block diagram illustrating another device for reminding based on an alarm clock according to an exemplary embodiment of the present disclosure.
Fig. 9 is a block diagram illustrating another device for reminding based on an alarm clock according to an exemplary embodiment of the present disclosure.
Fig. 10 is a block diagram illustrating another device for reminding based on an alarm clock according to an exemplary embodiment of the present disclosure.
Fig. 11 is a block diagram illustrating another device for reminding based on an alarm clock according to an exemplary embodiment of the present disclosure.
Fig. 12 is a block diagram illustrating another device for reminding based on an alarm clock according to an exemplary embodiment of the present disclosure.
Fig. 13 is a block diagram illustrating another device for reminding based on an alarm clock according to an exemplary embodiment of the present disclosure.
Fig. 14 is a block diagram illustrating another device for reminding based on an alarm clock according to an exemplary embodiment of the present disclosure.
Fig. 15 is a block diagram illustrating another device for reminding based on an alarm clock according to an exemplary embodiment of the present disclosure.
Fig. 16 is a block diagram illustrating another device for reminding based on an alarm clock according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present disclosure. As used in the present disclosure and the appended claims, terms in singular form such as "a" "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present disclosure, a first element can also be referred to as a second element. Similarly, a second element can also be referred to as a first element. Depending on the text, a term "if" as used herein can be interpreted as "when" "where" or "in response to".

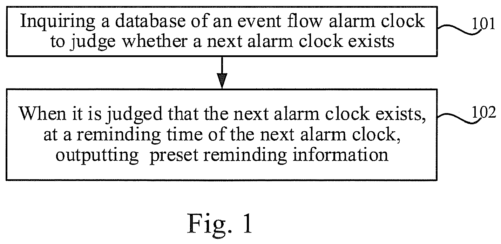

Fig. 1 is a flow chart showing a method for performing reminding based on an alarm clock according to an exemplary embodiment of the present disclosure. In accordance with the first aspect of the invention, the method is applied in a mobile terminal and in other embodiments not covered by the claims, may also be applied in a server, including the following steps.

In step 101, a database of an event flow alarm clock is inquired to judge (or determine) whether a next alarm clock exists.

The terminal involved in embodiments of the present disclosure may be apparatus which supports an alarm clock function, such as a smart phone, a tablet computer and a PDA or the like.

In the present invention, the event flow alarm clock contains at least two alarm clocks, and each alarm clock of the at least two alarm clocks contains at least one event respectively. The event flow alarm clock is opened or closed as a whole. In an embodiment, respective events in the event flow alarm clock are correlated with each other. Reminding times and preset reminding information of respective alarm clock are stored in the database. For example, a certain event flow alarm clock may include: getting up at 7:00, going out at 7:30, getting on a subway at 7:40, getting off the subway at 8:30, having breakfast at 8:45, entering a company at 8:55. In this example, 7:00, 7:30, 7:40 and 8:30 are reminding times; and the getting up, going out, getting on a subway and getting off the subway are preset reminding information. In some embodiments not covered by the claims, database is in a cloud server, while in the present invention is in a local terminal.

In the embodiments not covered by the claims, wherein the database is in the cloud server, the event flow alarm clock may be run in the cloud server. When the cloud server inquires out a reminding time of an alarm clock contained in the event flow alarm clock, it reads corresponding preset reminding information of the alarm clock in the database and sends the preset reminding information to the terminal. The terminal outputs the preset reminding information by a preset time length to remind a user. For example, the preset time length may be one minute. The preset reminding information is closed after one minute has passed. The cloud server may set the database as follows: firstly, acquire event information, for example, acquire respective time points of an event of grabbing a red envelope from alipay (an application for payment); secondly, establish the database of the event flow alarm clock based on the acquired information.

In the embodiments not covered by the claims, wherein the database is in the cloud server, the terminal may also acquire the database from the cloud server. Then the event flow alarm clock is run locally, reminding times and preset reminding information of respective alarm clocks contained in the event flow alarm clock are read out. The terminal monitors the system time and outputs the preset reminding information when the reminding times arrive. In this case, the terminal acquires the database form the cloud server in advance. The process may be: the terminal sends a request for acquiring the database to the cloud server, then receives information of the database sent by the cloud server, and then the terminal runs or installs the event flow alarm clock locally.

In the present invention, the database is in a local terminal, and after the terminal inquires the database, it reads a reminding time and preset reminding information corresponding to a next alarm clock. The terminal outputs the preset reminding information by a preset time length when the reminding time arrives. The preset reminding information may be one or more among a ring tone, a voice, a video and a picture.

When the database is in the local terminal, the user may set reminding times and preset reminding information of respective alarm clocks contained in the event flow alarm clock in advance by the terminal. It may include the following steps.

Firstly, a request for adding an event flow alarm clock input from a user is detected.

In an embodiment of the present disclosure, the terminal provides two alarm clock functions, i.e. an ordinary alarm clock and an event flow alarm clock for the user to select. The ordinary alarm clocks are alarm clock functions provided in the terminal in the related art, among which respective alarm clocks are mutually independent. When a certain alarm clock is opened, the terminal only reminds when a time corresponding to the alarm clock arrives.

Then, an event flow alarm clock setting page is displayed for the user to set.

As shown in Table. 1, the setting page may include an event flow alarm clock ID, repetition, remark and an alarm clock ID list.

**Table. 1 A data table of setting the event flow alarm clock**

| column name | illustration |
|---|---|
| event flow alarm clock ID | unique identification of the corresponding event flow alarm clock |
| repetition | repeating date of the corresponding event flow alarm clock |
| remark | illustration of the corresponding event flow alarm clock |
| alarm clock ID list | IDs of respective alarm clocks contained in corresponding event flow alarm clock |

Wherein an event flow alarm clock ID is a unique identification of the event flow alarm clock, which may be input from the user manually or automatically generated by the terminal.

Repetition means whether the event flow alarm clock as a whole is repeated, rather than whether a certain alarm clock contained in the event flow alarm clock is repeated. For example, a time of the event flow alarm clock may be set by checking any one day or more days among Monday to Sunday.

Remark may record illustration of the event flow alarm clock. For example, the remark is recipe of eggplant with chilli and potato, or a weekday alarm clock.

An alarm clock ID list is a list of respective alarm clocks contained in the event flow alarm clock. Each alarm clock also has a unique ID, which may be input from the user manually or automatically generated by the terminal.

Then, the user may add and set respective alarm clocks contained in the event flow alarm clock. The set content includes a reminding time, a reminding way (corresponding to preset reminding information), a reminding volume, a remark or a label.

Wherein the way of the reminding time may be determined from the user manually inputting the reminding time, selecting a time from the time list provided by the system, or adding any one or more alarm clocks selected from the created alarm clocks to the event flow alarm clock.

The user manually inputting the reminding time may be: the terminal receives time number input from the user; and stores the time number as a reminding time of alarm clock being set.

Selecting a time from the time list provided by the system may be: the terminal outputs and displays the time list; receives the time number selected from the user through the time list; and stores the time number as the reminding time of the alarm clock being set.

Selecting the created alarm clock may be: inquiring and displaying a list of unique identifications of the created alarm clocks; according to one or more unique identifications selected from the user through the list, selecting a corresponding alarm clock as an alarm clock being added; and setting a reminding time of the corresponding alarm clock as a reminding time of the alarm clock being added.

The above last way, still takes the above weekday event flow alarm clock as an example, it includes six event alarm clocks. The ordinary alarm clock database has stored the two alarm clocks of getting up at 7:00 and entering a company at 8:55. In this case, the system may display IDs of all the stored alarm clocks. The user may select the IDs of the two alarm clocks therefrom. Based on the IDs selected from the user, the terminal adds the corresponding alarm clocks as the event alarm clocks to the database of the event flow alarm clock. Then the left four alarm clocks in the event flow alarm clock are set, thus time taken by the user to create new alarm clocks is saved.

In addition, the created alarm clocks may be further edited, and the edited alarm clocks are added to the database of the event flow alarm clock. The editing process may include: entering an editing interface by editing function of the alarm clock, reselecting a reminding time and other settings of the alarm clock, saving the edited alarm clock after the set is accomplished, and adding the alarm clocks to the database of the event flow alarm clock.

It should be noted that, the reminding time may be set not only by directly setting specific reminding times of the alarm clocks, but also by setting time intervals between respective alarm clocks. In accordance with the present invention, it is: firstly, setting a reminding time of a first alarm clock contained in the event flow alarm clock; for a second alarm clock to a last alarm clock contained in the event flow alarm clock, successively setting a time interval between an alarm clock being set and a previous alarm clock; and based on the time interval and the reminding time of the previous alarm clock, calculating a reminding time of the alarm clock being set.

For example, for the recipe alarm clock, it cannot be determined when to begin cooking sometimes, i.e., at noon or at afternoon, at 11:30 or 12:00. In this case, it is more convenient to set time intervals between respective alarm clocks. For example, a time interval between the first alarm clock and the second alarm clock is 10 minutes, and a time interval between the second alarm clock and the third alarm clock is 8 minutes. The time of the first alarm clock may be set by experience. When the cooking is not begun at this time, it is only needed to modify the time of the first alarm clock to a time that the user intends to do cooking. The terminal may automatically calculate reminding times of subsequent alarm clocks according to the time intervals, which does not need to be modified one by one or reset.

For the set of a reminding way and preset reminding information, when the preset reminding information is a ring tone, a build-in ring tone of the terminal, vibration or a ring tone recorded or downloaded by the user may be selected. When the preset reminding information is a voice, it may be a recorded voice or a downloaded voice. When the event flow alarm clock is a recipe alarm clock, each cooking step as an event corresponds to one alarm clock. Setting the reminding way of the alarm clock as voice reminding will make operation of the user more convenient. When the preset reminding information is an image-text, it may be a build-in picture of the terminal, a downloaded picture or a text edited by the user. For example, when the event flow alarm clock is the recipe alarm clock, a picture corresponding to the current step may be displayed at the same time, to provide more intuitional and friendly reminding for the user. As another example, when the event flow alarm clock is a weekday alarm clock, picture of a smiling face or a struggle type may be displayed at the same time when the getting up alarm clock bell rings, which may give the user more motive to get up. When the preset reminding information is a short video, it may be a recorded or downloaded video. Generally, the reminding time length is from half a minute to two minutes. That is, the time length of the bell reminding or the voice, the video reminding or displaying the image-text is from half a minute to two minutes.

The volume setting is manually selected from the user according to personal habits.

To set the remark or label is to add illustration of an event corresponding to the alarm clock. For example, when the event flow alarm clock is a weekday alarm clock, labels corresponding to respective alarm clocks may include "getting up", "having a meeting" and "meeting a customer" or the like. When the event flow alarm clock is a recipe alarm clock, the labels may include "adding sault", "stirring for the first time" and "adjusting temperature of an oven to 170 degrees" or the like, to achieve effect of reminding the user from various aspects.

In an embodiment of the present disclosure, when an alarm clock is added to the event flow alarm clock, a reminding may be output every time adding an alarm clock: whether the adding is accomplished, and when the user selects no, an alarm clock setting page is output for the user to continue the set.

Finally, when the adding for respective alarm clocks in the event flow alarm clock is all accomplished, the event flow alarm clock is saved.

In order to save the setting timely to avoid lost, each alarm clock is saved after its setting is accomplished, and the event flow alarm clock is also saved after its setting is accomplished.

Each event flow alarm clock may have editing and deleting function options. Each alarm clock in each event flow alarm clock may also have editing and deleting function options, so that it only needs to edit the existing event flow alarm clock when setting the similar event flow alarm clock. Besides, when a certain alarm clock in the event flow alarm clock is not needed, it may be deleted. When the event flow alarm clock is not needed, it may be deleted.

The event flow alarm clock provided by the embodiment of the present disclosure is suitable for many situations, still taking the above weekday event flow alarm clock as an example to make illustration. Since many times in one day are fixed for office workers, the following alarm clocks are set by experience: getting up at 7:00, to leave enough time for washing and dressing up to guarantee a clean look for work; going out at 7:30, if going out too late, there will be many people on the subway, which is too crowded and it is hard to guarantee time for work; getting on the subway at 7:40, in order to guarantee breakfast time before work, it is latest to catch this subway; getting off the subway at 8:30, when the subway arrives at the station, in order to avoid missing the station due to playing a cellphone or reading a novel, there should be an alarm clock to remind getting off the subway; having breakfast at 8:40, to guarantee not to miss work time and ensure energy and efficiency for work in the morning; then entering the company at 8:55, to guarantee not to be late and have a transition time to enter working state.

The event flow alarm clock provided by embodiments of the present disclosure is also suitable for making a recipe. For example, if the user wants to cook eggplant with chilli and potato after work, he/she may set alarm clocks of respective cooking steps and save them as an event flow alarm clock.

The event flow alarm clock provided by embodiments of the present disclosure is also suitable for some entertainment events, for example, the event of grabbing the red envelopes in New Year. The user may set respective reminding times to grab the red envelopes to constitute an event flow alarm clock, so he will not be worried about missing chances to grab the red envelopes.

Then, the terminal goes on to inquire a database of an event flow alarm clock to judge whether a next alarm clock exists.

In steps of the present disclosure, after the previous alarm clock accomplishes reminding, the terminal goes on to inquire and judge (or determine) whether the next alarm clock exists based on the alarm clock ID list in the database of the event flow alarm clock.

In step 102, when it is judged (or determined) that the next alarm clock exists, at a reminding time of the next alarm clock, preset reminding information is output.

In embodiments of the present invention, wherein the database is in the local terminal, if the terminal can inquire out the next alarm clock, the reminding time of the next alarm clock is read out. When it is monitored that the reminding time arrives, a reminding is output according to a reminding way corresponding to the event flow alarm clock, that is, preset reminding information is output. If no next alarm clock is inquired out, that is, no next alarm clock exists, the terminal outputs a reminding that the event flow alarm clock finishes.

If in the above process, the terminal receives a cancelling indication or an aborting indication from the user, the event flow alarm clock is closed and the database of the event flow alarm clock is no longer read. If all alarm clocks in the event flow alarm clock have accomplished reminding, the terminal outputs the reminding that the event flow alarm clock finishes. After this, if the user sets repetition, go on to read the database of the event flow alarm clock according to the set repetition time. If the user does not set repetition, the event flow alarm clock is closed and the database of the event flow alarm clock is no longer read.

For the case where the database is in the cloud server, which is not covered by the claims, when the reminding time arrives, the cloud server sends the preset reminding information to the terminal. The terminal outputs the preset reminding information to remind the user.

In embodiments of the present disclosure, as shown in Table. 2, after the event flow alarm clock has finished reminding, number of alarm clocks having been accomplished in this event flow alarm clock may also be counted, the completeness is calculated and recorded in the database.

**Table. 2 A data table of the event flow alarm clock**

| column name | illustration |
|---|---|
| event flow alarm clock ID | unique identification of the corresponding event flow alarm clock |
| beginning time of the event flow alarm clock | beginning time to perform the event flow alarm clock |
| finishing time of the event flow alarm clock | finishing time to perform the event flow alarm clock |
| completeness | number of alarm clocks having accomplished reminding/the total number of alarm clocks |

Wherein there are two cases where the event flow alarm clock has finished reminding: the first case is where respective alarm clocks contained in the event flow alarm clock have all accomplished reminding and the next alarm clock in the database of the event flow alarm clock is read as null, then the event flow alarm clock has finished reminding; the second case is where the terminal receives an indication to close the alarm clock, abort the alarm clock or cancel the alarm clock input from the user, then the event flow alarm clock is closed, no next alarm clock is read out, and the reminding is not continued anymore. Each time after reminding of one alarm clock is accomplished, the terminal automatically marks the alarm clock having accomplished reminding in the database. In other words, the terminal records the ID of the alarm clock having accomplished reminding. Therefore, after the whole event flow alarm clock finishes, the terminal may count the number of alarm clocks having accomplished reminding in the event flow alarm clock based on the recorded alarm clock IDs, and obtain the completeness by calculating a ratio of the number of alarm clocks having accomplished reminding to the total number of alarm clocks contained in the event flow alarm clock.

Calculating the completeness is helpful for the user to timely adjust the event flow alarm clock. If the event flow alarm clock is often aborted by the user, it means that the setting of some alarm clocks is not reasonable enough. Therefore, some alarm clocks may be deleted or a reminding time or a reminding way may be adjusted.

In the embodiment of the present disclosure, after the completeness is calculated, the marks on the alarm clocks having accomplished reminding in the database are cleared. After the event flow alarm clock is opened next time, the alarm clocks having accomplished reminding are marked again.

Still referring to Table. 2, in the embodiment of the present disclosure, the beginning time and finishing time to perform the event flow alarm clock may also be recorded, which is helpful for the user to fully understand the executive condition of the event flow alarm clock, to timely adjust the event flow alarm clock.

In the embodiment of the present disclosure, an executable file may also be created based on the database of the event flow alarm clock. Then the executable file is sent to the cloud server to be downloaded by a user of other terminal, and it may be directly sent to other terminal. For example, the executable file of the event flow alarm clock may be sent to other user by a social network software or issued to the moments, to share with other user for references or to share completeness.

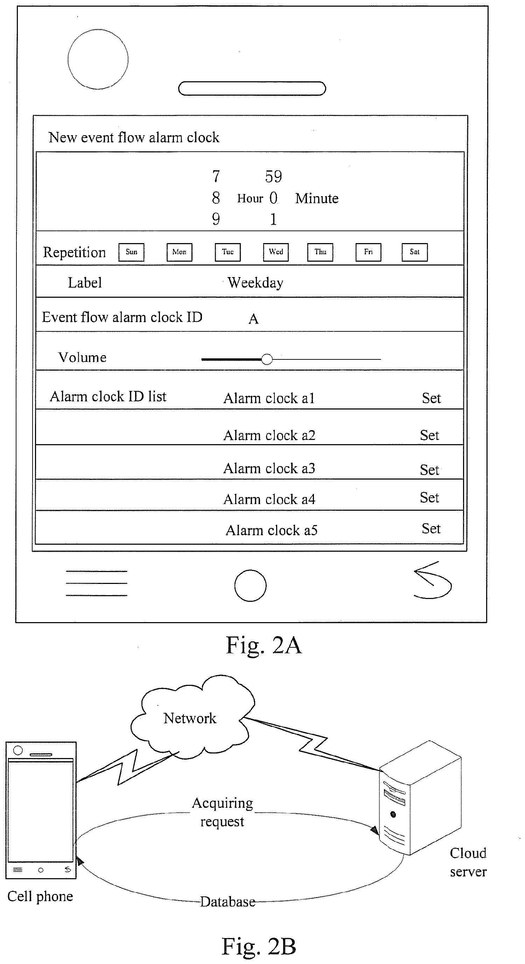

Fig. 2A is a schematic diagram showing an application scenario for reminding based on an alarm clock according to an exemplary embodiment of the present invention. In Fig. 2A, it includes a cell phone as a terminal. The user may set the event flow alarm clock on the cell phone. When the user selects to add a new event flow alarm clock, it can be seen from Fig. 2A that the terminal displays a plurality of items for the user to set, which include a list of the clock, a repetition setting option, a label, an event flow alarm clock ID, volume and ID list of the alarm clock. Each alarm clock ID corresponds to a setting option, so that the preset reminding information and reminding times of respective alarm clocks may be set separately.

Fig. 2B is a schematic diagram showing an application scenario for reminding based on an alarm clock according to an exemplary embodiment of the present disclosure, not covered by the claims. In Fig. 2B, it includes a cell phone as a terminal and further includes a cloud server. The cloud server is connected with the cell phone via a network. In this scenario, the database is in the cloud terminal. When the cell phone sends to the cloud server a request for acquiring the database, the cloud server sends the database of the event flow alarm clock to the cell phone, so that the event flow alarm clock may be run on the cell phone.

After the event flow alarm clock is opened, the terminal reads a reminding time and preset reminding information of the first alarm clock in the database, and outputs the corresponding preset reminding information when it is monitored that the reminding time arrives. Then, the terminal reads the database, and judges whether a next alarm clock exists. If the judgment is yes, a reminding time and preset reminding information of the next alarm clock is read out and the corresponding preset reminding information is sent at the reminding time of the next alarm clock. If the judgment is no, or the indication of aborting the alarm clock from the user is received, reading the database is stopped, and when the event flow alarm clock does not be set repetition, the event flow alarm clock is closed.

Corresponding to the method for reminding based on an alarm clock according to the above embodiments, the present disclosure also provides embodiments involving a device for reminding based on an alarm clock. This device may be a terminal such as a mobile terminal for instance.

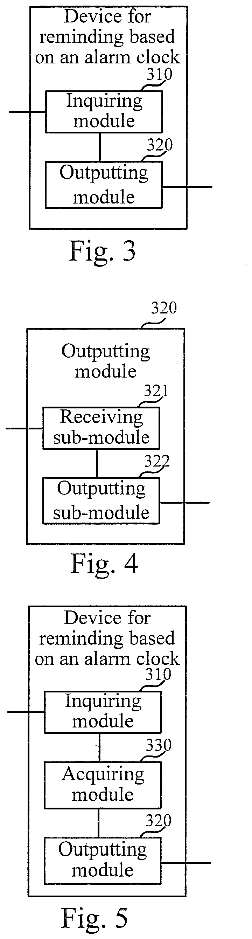

Fig. 3 is a block diagram illustrating a device for performing reminding based on an alarm clock according to an exemplary embodiment of the present disclosure. The device includes: an inquiring module 310 and an outputting module 320.

Wherein the inquiring module 310 is configured to inquire a database of an event flow alarm clock to judge (or determine) whether a next alarm clock exists, wherein the event flow alarm clock contains at least two alarm clocks, and each alarm clock of the at least two alarm clocks contains at least one event respectively.

The outputting module 320 is configured to, when the inquiring module 310 judges (or determines) that the next alarm clock exists, at a reminding time of the next alarm clock, output preset reminding information.

It can be seen from the above embodiment that, the device for reminding based on an alarm clock inquires a database to judge whether a next alarm clock exists and outputs a corresponding reminding at a reminding time when the next alarm clock exists. Thereby, opening an event flow alarm clock means opening a plurality of alarm clocks contained in the event flow alarm clock. It achieves overall control to a plurality of alarm clocks, increases usability of alarm clocks, saves time for a user to respectively control the plurality of alarm clocks, and provides more convenience for the user.

Fig. 4 is a block diagram illustrating another device for reminding based on an alarm clock according to an exemplary embodiment of the present disclosure. The embodiment is based on the embodiment as shown in Fig. 3. In embodiments not covered by the claims, wherein the database is in a cloud server, the outputting module 320 includes: a receiving sub-module 321 and an outputting sub-module 322.

Wherein the receiving sub-module 321 is configured to receive the preset reminding information in the database sent by the cloud server.

The outputting sub-module 322 is configured to output the preset reminding information received by the receiving sub-module 321 by a preset time length.

In the above embodiment not covered by the claims, the database of the event flow alarm clock is in a cloud server. In this case, the cloud server reads the database and monitors the event flow alarm clock. When a time of the alarm clock arrives, corresponding preset reminding information is read out and sent to a terminal. The terminal outputs the preset reminding information to remind the user.

Fig. 5 is a block diagram illustrating another device for reminding based on an alarm clock according to an exemplary embodiment of the present disclosure. The embodiment is based on the embodiment as shown in Fig. 3. The device further includes: an acquiring module 330.

Wherein the acquiring module 330 is configured to acquire the database of the event flow alarm clock from the cloud server.

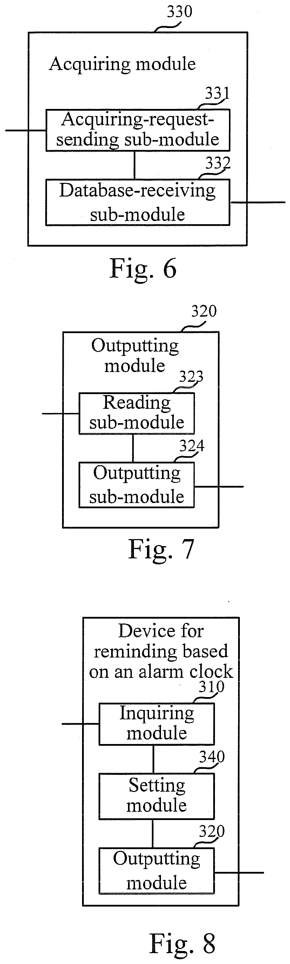

Fig. 6 is a block diagram illustrating another device for reminding based on an alarm clock according to an exemplary embodiment of the present disclosure. The embodiment is based on the embodiment as shown in Fig. 5. The acquiring module 330 includes: an acquiring-request-sending sub-module 331 and a database-receiving sub-module 332.

The acquiring-request-sending sub-module 331 is configured to send to the cloud server a request for acquiring the database.

The database-receiving sub-module 332 is configured to receive information of the database from the cloud server.

In the above embodiment not covered by the claims, database of the event flow alarm clock is in the cloud server, and the terminal may also acquire the database to the local to run the event flow alarm clock. The terminal may receive related information of the database by sending an acquiring request to the cloud server. It is more convenient to run the event flow alarm clock locally.

Fig. 7 is a block diagram illustrating another device for reminding based on an alarm clock according to an exemplary embodiment of the present disclosure. The embodiment is based on the embodiment as shown in Fig. 3. As in the case of the present invention, wherein the database is in a local terminal, the outputting module 320 includes: a reading sub-module 323 and an outputting sub-module 324.

Wherein the reading sub-module 323 is configured to read preset reminding information corresponding to the next alarm clock.

The outputting sub-module 324 is configured to output the preset reminding information read out by the reading sub-module 323 by a preset time length.

The preset reminding information output by the outputting sub-module 324 includes: any one or more among a ring tone, a voice, an image-text or a video.

In the above embodiment, when the database of the event flow alarm clock is in a local terminal, and the database is run locally, the terminal directly reads a reminding time of a next alarm clock in the database and monitors the system time, so that the corresponding preset reminding information is output to remind the user at the reminding time.

Fig. 8 is a block diagram illustrating another device for reminding based on an alarm clock according to an exemplary embodiment of the present disclosure. The embodiment is based on the embodiment as shown in Fig. 3. The device further includes: a setting module 340.

The setting module 340 is configured to set reminding times and preset reminding information of respective alarm clocks contained in the event flow alarm clock in the database.

In the above embodiment, when the database of the event flow alarm clock is in a local terminal, the user may set reminding times and preset reminding information of respective alarm clocks contained in the event flow alarm clock in advance.

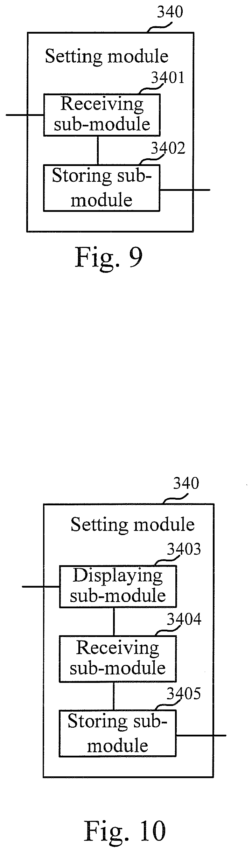

Fig. 9 is a block diagram illustrating another device for reminding based on an alarm clock according to an exemplary embodiment of the present disclosure. The embodiment is based on the embodiment as shown in Fig. 8. The setting module 340 includes: a receiving sub-module 3401 and a storing sub-module 3402.

Wherein the receiving sub-module 3401 is configured to receive a time number input from a user.

The storing sub-module 3402 is configured to store the time number received by the receiving sub-module 3401 as a reminding time of an alarm clock being set.

In the above embodiment, the way of setting a reminding time of the alarm clock may be: the user directly inputs a time number, and the terminal stores the received time number as a reminding time of the alarm clock.

Fig. 10 is a block diagram illustrating another device for reminding based on an alarm clock according to an exemplary embodiment of the present disclosure. The embodiment is based on the embodiment as shown in Fig. 8. The setting module 340 includes: a displaying sub-module 3403, a receiving sub-module 3404 and a storing sub-module 3405.

Wherein the displaying sub-module 3403 is configured to output and display a list of time.

The receiving sub-module 3404 is configured to receive a time number selected from a user through the list of times displayed by the displaying sub-module 3403.

The storing sub-module 3405 is configured to store the time number received by the receiving sub-module 3404 as a reminding time of an alarm clock being set.

In the above embodiment, the way of setting a reminding time may also be: the terminal displays the time list to the user, the user selects a time number based on the time list, and the terminal stores the time number selected from the user as a reminding time of the alarm clock.

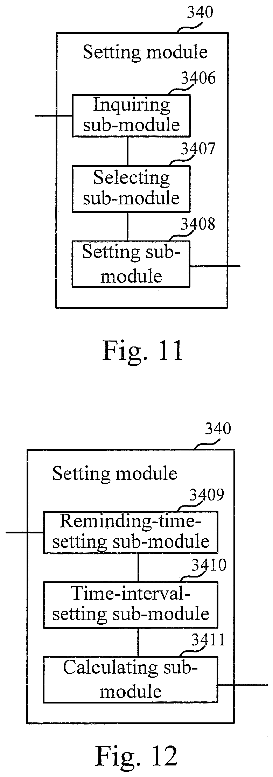

Fig. 11 is a block diagram illustrating another device for reminding based on an alarm clock according to an exemplary embodiment of the present disclosure. The embodiment is based on the embodiment as shown in Fig. 8. The setting module 340 includes: an inquiring sub-module 3406, a selecting sub-module 3407 and a setting sub-module 3408.

Wherein the inquiring sub-module 3406 is configured to inquire and display a list of unique identifications of created alarm clocks.

The selecting sub-module 3407 is configured to, according to one or more unique identifications selected from a user through the list displayed by the inquiring sub-module 3406, select a corresponding alarm clock as an alarm clock being set.

The setting sub-module 3408 is configured to set a reminding time of the corresponding alarm clock selected by the selecting sub-module 3407 as a reminding time of the alarm clock being set.

In the above embodiment, the way of setting a reminding time may also be: adding the created alarm clocks stored in the terminal to the event flow alarm clock, thus saving time for the user to recreate the alarm clock and providing more convenience for the user.

Fig. 12 is a block diagram illustrating another device for reminding based on an alarm clock according to an exemplary embodiment of the present disclosure. The embodiment is based on the embodiment as shown in Fig. 8. The setting module 340 includes: a reminding-time-setting sub-module 3409, a time-interval-setting sub-module 3410 and a calculating sub-module 3411.

Wherein the reminding-time-setting sub-module 3409 is configured to set a reminding time of a first alarm clock contained in the event flow alarm clock.

The time-interval-setting sub-module 3410 is configured to, for a second alarm clock to a last alarm clock contained in the event flow alarm clock, successively set a time interval between an alarm clock being set and a previous alarm clock.

The calculating sub-module 3411 is configured to, based on the time interval set by the time-interval-setting sub-module 3410 and the reminding time of the previous alarm clock, calculate a reminding time of the alarm clock being set.

In the above embodiment, the way of setting a reminding time may also be: setting time intervals between respective alarm clocks of the event flow alarm clock, thus improving flexibility of the event flow alarm clock. Whenever the alarm clock is opened, the terminal may automatically calculate the reminding times of the second alarm clock to the last alarm clock, which is suitable of more scenarios.

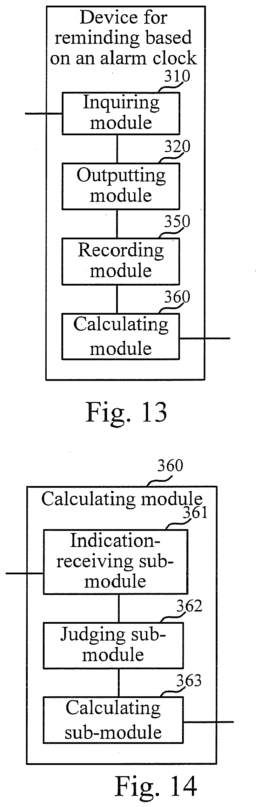

Fig. 13 is a block diagram illustrating another device for reminding based on an alarm clock according to an exemplary embodiment of the present disclosure. The embodiment is based on the embodiment as shown in Fig. 3. When the database is in the local terminal, the device further includes: a recording module 350 and a calculating module 360.

Wherein the recording module 350 is configured to record unique identifications of an alarm clocks having accomplished reminding in the database.

The calculating module 360 is configured to, when it is monitored that the event flow alarm clock has finished reminding, calculate completeness based on the unique identifications recorded by the recording module 350, wherein the completeness is a ratio of a number of the alarm clocks having accomplished reminding to a number of all alarm clocks in the event flow alarm clock.

In the above embodiment, after the event flow alarm clock finishes reminding, the completeness may also be calculated, which is helpful for the user to adjust the event flow alarm clock based on the completeness.

Fig. 14 is a block diagram illustrating another device for reminding based on an alarm clock according to an exemplary embodiment of the present disclosure. The embodiment is based on the embodiment as shown in Fig. 13. The calculating module 360 includes: an indication-receiving sub-module 361 or a judging sub-module 362 and a calculating sub-module 363.

Wherein the indication-receiving sub-module 361 is configured to receive an indication of aborting the event flow alarm clock from a user.

The judging sub-module 362 is configured to inquire the database of the event flow alarm clock and judge whether a next alarm clock exists.

The calculating sub-module 363 is configured to, when the indication-receiving sub-module 361 receives the indication of aborting the event flow alarm clock or the judging sub-module 362 judges that no next alarm clock exists, calculate the completeness based on the recorded unique identifications.

In the above embodiment, the finishing of the event flow alarm clock may be closed by a trigger of the user, or it may be closed when all the alarm clocks in the database have accomplished reminding.

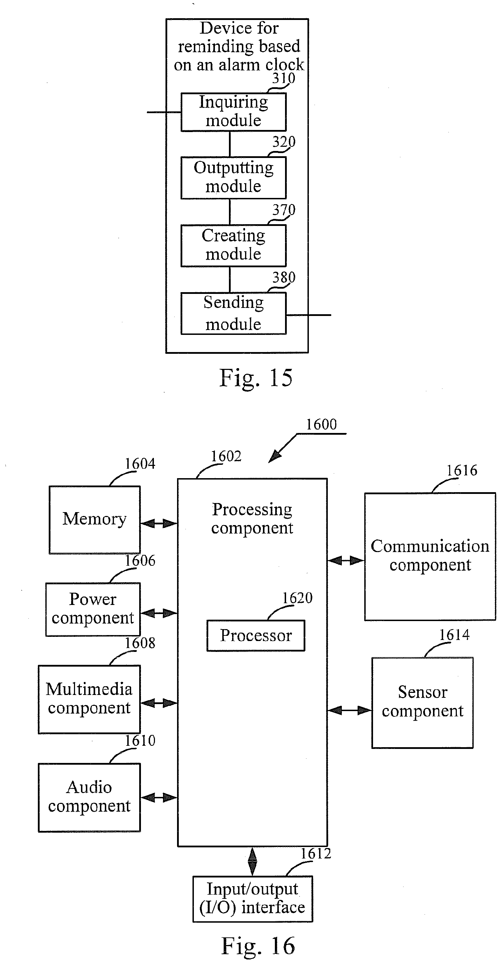

Fig. 15 is a block diagram illustrating another device for reminding based on an alarm clock according to an exemplary embodiment of the present disclosure. The embodiment is based on the any embodiment as shown in Figs. 3-14. As in the case of the present invention, wherein the database is in
the local terminal, the device further includes: a creating module 370 and a sending module 380.

Wherein the creating module 370 is configured to create an executable file based on the database of the event flow alarm clock.

The sending module 380 is configured to send the executable file created by the creating module 370 to the cloud server.

In the above embodiment, the terminal may further create executable file for the set database of the event flow alarm clock, and send the executable file to the cloud server. More terminals may download the executable file from the cloud server, which provides more convenience for the user.

In the above embodiment, respective events in the event flow alarm clock may be correlated with each other.

Correspondingly, the present disclosure further provides another device for reminding based on an alarm clock, including: a processor; and a memory for storing instructions executable by the processor; wherein the processor is configured to perform:
inquiring a database of an event flow alarm clock to judge whether a next alarm clock exists, wherein the event flow alarm clock contains at least two alarm clocks, and each alarm clock of the at least two alarm clocks contains at least one event respectively; and
when it is judged that the next alarm clock exists, at a reminding time of the next alarm clock, outputting preset reminding information.

Implementation of the functions and operations of the modules in the above devices can be specifically referred to the implementation of the corresponding steps in the above methods, which will not be repeated herein.

For the device embodiments, since they correspond to the method embodiments, they can be referred to the related part of the description of the method embodiments. The device embodiments described above are merely illustrative. The units described as separate may be or may not be physically separate, and the components illustrated as a unit may be or may not be physical units, and may be at the same location, or may be distributed to a plurality of units over the network. A part of or all of the modules can be selected to achieve the objective of the present disclosure as desired. One skilled in the art can understand and practice the embodiments without paying creative labor.

As shown in Fig. 16 is a device 1600 for reminding based on an alarm clock according to an exemplary embodiment. For example, the device 1600 may be provided as a terminal. Referring to Fig. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the device 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, keys, and the like. The keys may include, but are not limited to, a home key, a volume key, a starting key, and a locking key.

The sensor component 1614 includes one or more sensors to provide status assessments of various aspects of the device 1600. For instance, the sensor component 1614 may detect an open/closed status of the device 1600, relative positioning of components, e.g., the display and the keypad, of the device 1600, a change in position of the device 1600 or a component of the device 1600, a presence or absence of user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may further include a light sensor, such as a CMOS or CCD image sensor, for use in imaging applications. In some embodiments, the sensor component 1614 may further include an accelerometer sensor, a gyroscope sensor, a magnetic sensor, a pressure sensor, a microwave sensor, or a temperature sensor.

The communication component 1616 is configured to facilitate communication, wired or wirelessly, between the device 1600 and other devices. The device 1600 may access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 1720 in the device 1700, for performing the above-described methods. For example, the non-transitory computer-readable storage medium may be a ROM, a RAM, a CD-ROM, a magnetic tape, a floppy disc, an optical data storage device, and the like.

It will be appreciated that the present invention is not limited to the exact construction that has been described above and illustrated in the accompanying drawings, and that various modifications and changes can be made without departing from the scope of the invention, which is limited by the appended claims.

## Claims

1. A method applied in a mobile terminal to perform reminding based on an alarm clock, comprising:
inquiring (101) a database of an event flow alarm clock to judge whether a next alarm clock exists, the database being in said mobile terminal, wherein the event flow alarm clock contains at least two alarm clocks, each alarm clock of the at least two alarm clocks containing at least one event respectively; and
when it is judged that the next alarm clock exists, at a reminding time of the next alarm clock, outputting (102) preset reminding information,
wherein before the inquiring (101) a database of an event flow alarm clock, the method further comprises:
setting reminding times and preset reminding information of respective alarm clocks contained in the event flow alarm clock in the database;
wherein the setting reminding times of respective alarm clocks contained in the event flow alarm clock in the database comprises:
setting a reminding time of a first alarm clock contained in the event flow alarm clock;
for a second alarm clock to a last alarm clock contained in the event flow alarm clock, successively setting a time interval between an alarm clock being set and a previous alarm clock; and
based on the time interval and a reminding time of the previous alarm clock, calculating a reminding time of the alarm clock being set.

2. The method of claim 1, wherein the outputting (102) preset reminding information comprises:
reading preset reminding information corresponding to the next alarm clock; and
outputting the preset reminding information by a preset time length.

3. A device terminal for performing reminding based on an alarm clock, comprising:
an inquiring module (310) configured to inquire a database of an event flow alarm clock to judge whether a next alarm clock exists, wherein the event flow alarm clock contains at least two alarm clocks, the database being in said device terminal, each alarm clock of the at least two alarm clocks containing at least one event respectively; and
an outputting module (320) configured to, when it is judged that the next alarm clock exists, at a reminding time of the next alarm clock, output preset reminding information,
the device further comprising:
a setting module (340) configured to set reminding times and preset reminding information of respective alarm clocks contained in the event flow alarm clock in the database
wherein the setting module (340) comprises:
a reminding-time-setting sub-module (3406) configured to set a reminding time of a first alarm clock contained in the event flow alarm clock;
a time-interval-setting sub-module (3407) configured to, for a second alarm clock to a last alarm clock contained in the event flow alarm clock, successively set a time interval between an alarm clock being set and a previous alarm clock; and
a calculating sub-module (3408) configured to, based on the time interval and the reminding time of the previous alarm clock, calculate a reminding time of the alarm clock being set.

4. The device of claim 3, the outputting module (320) comprises:
a reading sub-module (323) configured to read preset reminding information corresponding to the next alarm clock; and
an outputting sub-module (324) configured to output the preset reminding information by a preset time length.

5. A computer program which, when executed on a processor of a mobile terminal, performs the method according to claim 1 or 2.

## Patentansprüche

1. Verfahren, das in einem mobilen Endgerät angewendet wird, um eine Erinnerung auf der Grundlage eines Weckers durchzuführen, umfassend:
Abfragen (101) einer Datenbank eines Ereignisflussweckers, um zu beurteilen, ob ein nächster Wecker existiert, wobei sich die Datenbank in dem mobilen Endgerät befindet, wobei der Ereignisflusswecker mindestens zwei Wecker enthält, wobei jeder Wecker der mindestens zwei Wecker jeweils mindestens ein Ereignis enthält, und
wenn beurteilt wird, dass der nächste Wecker existiert, Ausgeben (102) voreingestellter Erinnerungsinformationen zu einer Erinnerungszeit des nächsten Weckers,
wobei das Verfahren vor dem Abfragen (101) einer Datenbank eines Ereignisflussweckers ferner umfasst:
Einstellen von Erinnerungszeiten und voreingestellten Erinnerungsinformationen jeweiliger Wecker, die in dem Ereignisablaufwecker in der Datenbank enthalten sind,
wobei das Einstellen von Erinnerungszeiten jeweiliger Wecker, die in dem Ereignisflusswecker in der Datenbank enthalten sind, umfasst:
Einstellen einer Erinnerungszeit eines ersten Weckers, der in dem Ereignisflusswecker enthalten ist,
nacheinander Einstellen für einen zweiten Wecker bis zu einem letzten Wecker, der in dem Ereignisflusswecker enthalten ist, eines Zeitintervalls zwischen einem Wecker, der gerade eingestellt wird, und einem vorherigen Wecker, und
Berechnen einer Erinnerungszeit des Weckers, der gerade eingestellt wird, auf der Grundlage des Zeitintervalls und einer Erinnerungszeit des vorherigen Weckers.

2. Verfahren nach Anspruch 1, wobei das Ausgeben (102) voreingestellter Erinnerungsinformationen umfasst:
Lesen voreingestellter Erinnerungsinformationen, die dem nächsten Wecker entsprechen, und
Ausgeben der voreingestellten Erinnerungsinformationen anhand einer voreingestellten Zeitspanne.

3. Vorrichtungsendgerät zum Durchführen eines Erinnerns auf der Grundlage eines Weckers, umfassend:
ein Abfragemodul (310), das dafür konfiguriert ist, eine Datenbank eines Ereignisflussweckers abzufragen, um zu beurteilen, ob ein nächster Wecker existiert, wobei der Ereignisflusswecker mindestens zwei Wecker enthält, wobei sich die Datenbank in dem Vorrichtungsendgerät befindet und jeder Wecker der mindestens zwei Wecker jeweils mindestens ein Ereignis enthält, und
ein Ausgabemodul (320), das dafür konfiguriert ist, wenn beurteilt wird, dass der nächste Wecker existiert, zu einer Erinnerungszeit des nächsten Weckers voreingestellte Erinnerungsinformationen auszugeben,
wobei die Vorrichtung ferner umfasst:
ein Einstellmodul (340), das dafür konfiguriert ist, Erinnerungszeiten und voreingestellte Erinnerungsinformationen der jeweiligen Wecker, die in dem Ereignisflusswecker in der Datenbank enthalten sind, einzustellen,
wobei das Einstellmodul (340) umfasst:
ein Erinnerungszeiteinstellungs-Teilmodul (3406), das dafür konfiguriert ist, eine Erinnerungszeit eines ersten Weckers, der in dem Ereignisflusswecker enthalten ist, einzustellen,
ein Zeitintervalleinstellungs-Teilmodul (3407), das dafür konfiguriert ist, für einen zweiten Wecker bis zu einem letzten Wecker, der in dem Ereignisflusswecker enthalten ist, nacheinander ein Zeitintervall zwischen einem Wecker, der gerade eingestellt wird, und einem vorherigen Wecker einzustellen, und
ein Berechnungs-Teilmodul (3408), das dafür konfiguriert ist, auf der Grundlage des Zeitintervalls und der Erinnerungszeit des vorherigen Weckers eine Erinnerungszeit des eingestellten Weckers zu berechnen.

4. Vorrichtung nach Anspruch 3, wobei das Ausgabemodul (320) umfasst:
ein Lese-Teilmodul (323), das dafür konfiguriert ist, voreingestellte Erinnerungsinformationen zu lesen, die dem nächsten Wecker entsprechen, und
ein Ausgabe-Teilmodul (324), das dafür konfiguriert ist, die voreingestellten Erinnerungsinformationen anhand einer voreingestellten Zeitdauer auszugeben.

5. Computerprogramm, das, wenn es in einem Prozessor eines mobilen Endgerätes ausgeführt wird, das Verfahren nach Anspruch 1 oder 2 ausführt.

## Revendications

1. Procédé appliqué dans un terminal mobile pour effectuer un rappel sur la base d'un réveil, comprenant :
l'interrogation (101) d'une base de données d'un réveil de flux d'événements pour juger si un prochain réveil existe, la base de données se trouvant dans ledit terminal mobile, dans lequel le réveil de flux d'événements contient au moins deux réveils, chaque réveil des au moins deux réveils contenant au moins un événement respectivement ; et
lorsqu'il est jugé que le prochain réveil existe, à une heure de rappel du prochain réveil, la sortie (102) d'informations de rappel prédéfinies,
dans lequel avant l'interrogation (101) d'une base de données d'un réveil de flux d'événements, le procédé comprend en outre :
le réglage d'heures de rappel et d'informations de rappel prédéfinies de réveils respectifs contenus dans le réveil de flux d'événements dans la base de données ;
dans lequel le réglage d'heures de rappel de réveils respectifs contenus dans le réveil de flux d'événements dans la base de données comprend :
le réglage d'une heure de rappel d'un premier réveil contenu dans le réveil de flux d'événements ;
pour un deuxième réveil jusqu'à un dernier réveil contenus dans le réveil de flux d'événements, le réglage successif d'un intervalle de temps entre un réveil en cours de réglage et un réveil précédent ; et
sur la base de l'intervalle de temps et d'une heure de rappel du réveil précédent, le calcul d'une heure de rappel du réveil en cours de réglage.

2. Procédé selon la revendication 1, dans lequel la sortie (102) d'informations de rappel prédéfinies comprend :
la lecture d'informations de rappel prédéfinies correspondant au prochain réveil ; et
la sortie des informations de rappel prédéfinies pendant une durée prédéfinie.

3. Terminal de dispositif pour effectuer un rappel sur la base d'un réveil, comprenant :
un module d'interrogation (310) configuré pour interroger une base de données d'un réveil de flux d'événements pour juger si un prochain réveil existe, dans lequel le réveil de flux d'événements contient au moins deux réveils, la base de données se trouvant dans ledit terminal de dispositif, chaque réveil des au moins deux réveils contenant au moins un événement respectivement ; et
un module de sortie (320) configuré pour, lorsqu'il est jugé que le prochain réveil existe, à une heure de rappel du prochain réveil, sortir des informations de rappel prédéfinies,
le dispositif comprenant en outre :
un module de réglage (340) configuré pour régler des heures de rappel et des informations de rappel prédéfinies de réveils respectifs contenus dans le réveil de flux d'événements dans la base de données ;
dans lequel le module de réglage (340) comprend :
un sous-module de réglage d'heure de rappel (3406) configuré pour régler une heure de rappel d'un premier réveil contenu dans le réveil de flux d'événements ;
un sous-module de réglage d'intervalle de temps (3407) configuré pour, pour un deuxième réveil jusqu'à un dernier réveil contenus dans le réveil de flux d'événements, régler successivement un intervalle de temps entre un réveil en cours de réglage et un réveil précédent ; et
un sous-module de calcul (3408) configuré pour, sur la base de l'intervalle de temps et de l'heure de rappel du réveil précédent, calculer une heure de rappel du réveil en cours de réglage.

4. Dispositif selon la revendication 3, dans lequel le module de sortie (320) comprend :
un sous-module de lecture (323) configuré pour lire des informations de rappel prédéfinies correspondant au prochain réveil ; et
un sous-module de sortie (324) configuré pour sortir les informations de rappel prédéfinies pendant une durée prédéfinie.

5. Programme informatique qui, lorsqu'il est exécuté sur un processeur d'un terminal mobile, effectue le procédé selon la revendication 1 ou 2.
